# EUROPEAN PATENT APPLICATION

(11) **EP 4 474 527 A1**
(43) Date of publication of application: **11.12.2024**
(21) Application number: 23382538.9
(22) Date of filing: 05.06.2023
(51) Int. Cl.: C25B 1/04, C25B 15/02, C25B 15/08

(54) **HYDROGEN GENERATION SYSTEM AND METHOD**

(71) Applicant: Hydroox Tech Corp, SL, 29004 Málaga (ES)
(72) Inventor: Duarte Rondán, José Manuel, 29004 Málaga (ES); Campos Germán, Miguel Ángel, 29004 Málaga (ES)
(74) Representative: Sahuquillo Huerta, Jesús

(57) **Abstract**

A hydrogen generation system and method which is configured to provide hydrogen gas to a thermal machine (7) and which comprises a main tank (1) containing an electrolyte solution comprising distilled water and basic alkaline catalyst connected to an electrolytic cell (6) associated with a pulsed direct current electrical power supply (8) configured to cause electrolysis of the water comprising the electrolyte contained in said electrolytic cell upon passage of an electrical current, the electrolytic cell (6) being connected to the main tank (1) by means of a plurality of conduits configured to allow the recirculation of the electrolyte and the hydrogen gas generated.

## Description

### Technical field

The present invention relates to a device and a method of generating hydrogen by means of alkaline pulsed direct current electrolysis with distilled water and basic catalyst KOH and NaOH in different proportions.

### State of the art

The knowledge of the disintegration of hydrogen from an aqueous solution is more than known to science since the end of the 18th century. State-of-the-art devices for hydrogen or oxyhydrogen production are limited to a pulse generation system that regulates the resulting frequency of the system - working cycle - so that the user must be aware of the increase of the current flowing through the electrodes (by means of an ammeter or voltmeter) apart from a simpler electrifier configuration as far as the functional assembly is concerned.

For example, WO2014120954A1 describes an on-demand oxyhydrogen fuel system that includes an oxyhydrogen generator that is incorporated into a standard internal combustion engine. A microcontroller activates the oxyhydrogen generator when oxyhydrogen is needed. The oxyhydrogen is then mixed with the exhaust gases from a PCV valve which are recycled through the intake manifold. The addition of oxyhydrogen provides a highly efficient fuel source that can dramatically increase fuel efficiency and reduce emissions.

US20150144483A1 discloses a gas generator with a cooling system and comprises an outer tank, an inner tank, and an electrolytic tank module. The outer tank has a coolant to cool the electrolytic tank module and the inner tank is configured in the outer tank, so that the temperature of the gas generator will be reduced to avoid hydrogen explosion. Furthermore, in the present invention, the hydrogen-oxygen gas generated by the electrolytic tank module will be introduced into the inner tank, and the temperature of the hydrogen-oxygen gas will further decrease through the liquid water in the inner tank to decrease the probability of hydrogen explosion.

Finally, document ES2363899B1 describes a device for the generation of oxyhydrogen, comprising an electrolytic cell associated with an electrical power supply, which causes the electrolysis of the water that makes up the electrolyte contained in the electrolytic cell when an electrical current flows through it, the electrolytic cell being connected to a tank by two conduits allowing the recirculation of the electrolyte and the oxyhydrogen gas generated. This tank has an outlet connected to a bubbler, which has an outlet for the filtered oxyhydrogen. The power supply comprises an electrical pulse modulator connected to the electrical cell to modify the quantity of electrical current supplied, this electrical pulse modulator being associated with means of control and monitoring. However, none of these documents describes a system or method according to the claims accompanying this specification.

### Explanation of the invention

An object of the invention is a hydrogen generation system which is configured to provide hydrogen gas to a thermal machine and which comprises a main tank with an electrolytic solution composed of distilled water and basic alkaline catalyst connected to an electrolytic cell associated with a pulsating direct current electrical power supply configured to cause electrolysis of the water forming the electrolyte contained in said electrolytic cell upon the passage of an electrical current, The electrolytic cell is connected to the main tank by means of a number of pipes configured to allow recirculation of the electrolyte and the hydrogen gas generated.

In a particular embodiment, the system comprises a processor configured to monitor the parameters of the pulsed DC power supply, the level of the catalyst solution, temperature, pressure, hydrogen produced, alarms, power outages and data communication, so that depending on these values it can interrupt the electrolysis.

In another embodiment, the system comprises at the outlet of the hydrogen gas from the main tank a vapour trap or decanter provided with a drain and where the decanter is configured to prevent the electrolyte from the solution from continuing into the rest of the circuit.

In another embodiment, the system comprises a safety bubbler tank at the outlet of the decanter, where the bubbler tank contains tap or distilled water, which acts as an extra barrier to prevent a deflagration from reaching the main tank.

In another embodiment, the system comprises a filter at the outlet of the bubbler tank that is configured to dry the gas from possible water vapour concentrations.

Another aspect of the invention describes a method of hydrogen generation comprising:
an electrolyte solution consisting of distilled water and a basic alkaline catalyst in a reservoir, wherein the reservoir is connected by means of several conduits for the circulation of a fluid to an electrolytic cell which, in turn, is associated with a pulsating DC power supply,
generate the electrolysis of water in the electrolytic cell by means of a pulsating direct current,
recirculating the electrolyte solution from the tank to the electrolytic cell and the hydrogen gas generated by the electrolysis from the electrolytic cell to the tank; and
to circulate the gas generated in the electrolysis from the tank through a circuit comprising a decanter, a bubbler tank, a filter, and flame arresters to supply fuel gas to a thermal machine.

In a practical embodiment of the method, it comprises a stage of decantation of the electrolyte at the outlet of the tank. In another practical embodiment of the method, it comprises a stage of drying the hydrogen gas from possible concentrations of water vapour before reaching the thermal machine.

Thanks to the present invention, two problems described in the state of the art for the control of hydrogen gas generation in devices coupled to thermal machines are solved. On the one hand, by controlling the process by means of an algorithm programmed in the processor, the intensity values defined by the user will be kept constant at all times, preventing this value from varying due to an increase in the concentration of the electrolyte in the solution to which the hydrogen gas generator is coupled, a problem that arises from the use of traditional PWMs that use variable electrical resistors, which are sensitive to vibrations, in addition to a longer useful life and higher stable efficiency. Finally, this device will ensure safe hydrogen gas generation by decreasing the risks associated with commercial and residential applications of these devices thanks to the sensors and control actuators it includes.

### Brief description of the figures

The following is a very brief description of a series of drawings which help to better understand the invention, and which relate expressly to an embodiment of the invention which is presented as a non-limiting example of the invention.

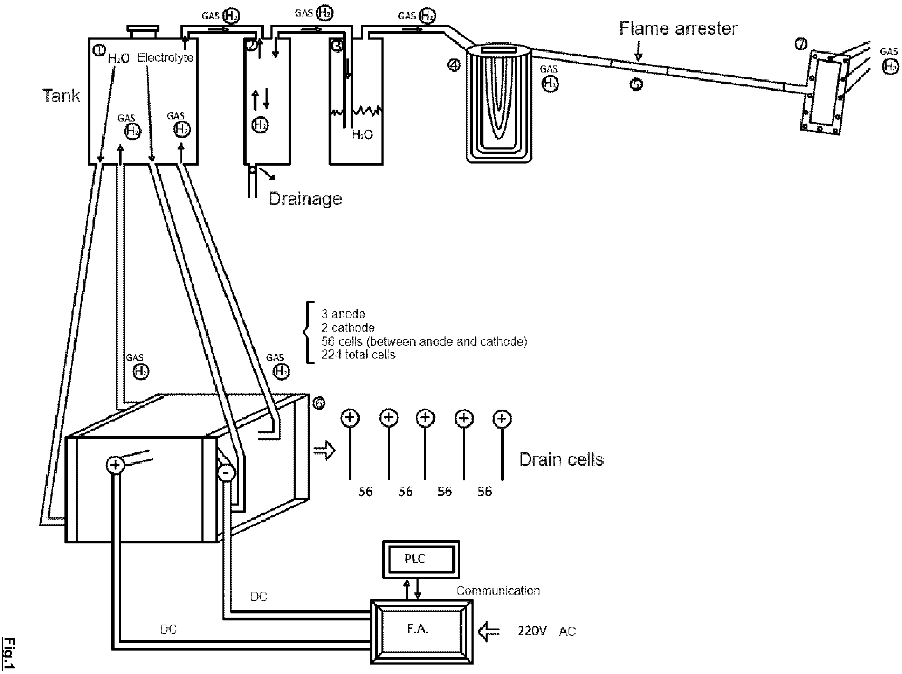

FIG.1 shows a schematic of the device of the invention.

The following numerical references are used in this scheme:
1. Main tank or tank with catalytic solution
2. Steam trap or decanter
   2.1. Steam trap drain
3. Safety bubbler tank
4. Filter
5. Explosion prevention device or flame arrester
6. Dry electrolysis cell or electrolytic cell.
7. Thermal machine
8. Pulsed DC power supply
9. Processor or PLC.

### Detailed explanation of one embodiment of the invention

As can be seen in the diagram of the attached figure, the device of the invention comprises a 220V alternating current power supply, which feeds a pulsed direct current power supply 8 and a processor 9 configured to control the process executed by the invention.

A pulsed power supply current is a DC power supply that undergoes regular changes in magnitude from a constant value. The changes may be in current or voltage. These changes or pulses are always in the same direction as the current.

The DC power supply controls the voltage, frequency, and duty cycle according to the maximum current intensity and, consequently, due to the electrolyte concentration due to the water consumption, which increases as H₂ O is consumed. Therefore, the duty cycle is automatically modified to always maintain the same current intensity. In other words, as H₂ O is consumed, the duty cycle decreases.

Processor 9 - in one embodiment a programmable logic controller (PLC) - is configured to control power supply parameters, catalyst solution level, temperature, pressure, hydrogen produced, alarms, power outages and data communication, such that it can take sensor readings and, based on these, start, or stop electrolysis.

Thus, the device comprises a hydrogen sensor configured to detect the presence of hydrogen in the main tank 1 such that, if the hydrogen level is detected to exceed a certain threshold, it stops the electrolysis process and locks the device. The device also comprises temperature and pressure detectors configured to detect if their respective maximum thresholds are exceeded.

The dry electrolysis cell 6 is configured - in a particular non-limiting realisation - by three anodes and two cathodes, with 56 cells between anode and cathode, with a total of 224 cells. This dry electrolysis cell 6 is connected to the main tank 1. Thus, in the dry electrolysis cell 6 the water molecule (Hz O) is separated into hydrogen (H₂) and oxygen (O) in a joint gas, which exits through side holes -higher- allowing the catalytic solution to flow from the main tank 1 towards the interior of the cell 6, through the lower side holes -lower than the side holes for the exit of the joint gas- due to the fact that the density of the catalytic solution is higher than the gas produced in the cell 6 itself.

From the electrolytic cell 6, the gas passes to the main tank, which houses the catalytic solution (in this practical realisation, distilled water, and basic catalyst KOH and NaOH in different proportions) in the volume necessary to size the reserve, for the required hours of operation, always having a level of H₂ O and a minimum catalyst for the proper functioning of the invention. If this level is not the minimum required by the process, the whole system would be stopped until the tank 1 is filled. The average consumption, in this example of practical realisation, is approximately 0.5 litres/hour.

Once the hydrogen gas passes from the electrolytic cells 6 into the main tank 1, the hydrogen gas flows into a vapour trap or decanter 2, provided with a drain 2.1 which is configured to prevent the electrolyte from the solution from continuing into the rest of the circuit.

From settler 2, the hydrogen gas passes into a safety bubbler tank 3 in a long pipeline that goes almost to the end of bubbler tank 3, containing tap or distilled water, which acts as an extra barrier to prevent a deflagration from reaching the main tank, where more hydrogen and oxygen will be accumulated in the non-catalytic solution zone before leaving settler 2.

After the safety bubbler 3, the hydrogen gas passes through a filter 4, which is configured to dry the gas from possible water vapour concentrations due to the optimum process temperatures, ranging from 50°C to 80°C. This filter 4, in a practical non-limiting embodiment, is a methacrylate expansion vessel with a fibre filter that traps the water vapour. Finally, at the outlet of the filter 4, a flame arrester device, which is a commercial explosion-proof safety element, is placed before the hydrogen gas outlet for use in a thermal machine 7.

## Claims

1. A hydrogen generation system which is configured to provide hydrogen gas to a thermal machine (7) and which comprises a main tank (1) containing an electrolyte solution comprising distilled water and basic alkaline catalyst connected to an electrolytic cell (6) associated with a pulsed direct current electrical power supply (8) configured to cause electrolysis of the water comprising the electrolyte contained in said electrolytic cell upon passage of an electrical current, the electrolytic cell (6) being connected to the main tank (1) by means of a plurality of conduits configured to allow the recirculation of the electrolyte and the hydrogen gas generated.

2. The system according to claim 1, comprising a processor (9) configured to control the parameters of the pulsed DC power supply (8), the level of the catalytic solution, temperature, pressure, hydrogen produced, alarms, power cuts and data communication, so that depending on these values it can interrupt the electrolysis.

3. The system according to any one of claims 1 or 2, comprising at the outlet of the hydrogen gas from the main tank (1) a vapour trap or decanter (2) provided with a drain (2.1), and wherein said decanter (2) is configured to prevent the electrolyte from the solution from continuing in the rest of the circuit.

4. The system according to any one of the preceding claims, comprising a safety bubbler tank (3) at the outlet of the decanter (2), wherein said bubbler tank (3) contains tap or distilled water, which acts as an extra barrier to prevent a deflagration from reaching the main tank (1).

5. The system according to any one of the preceding claims, comprising a filter (4) at the outlet of the bubbler tank (3) which is configured to dry the gas from possible concentrations of water vapour.

6. A hydrogen generation method comprising the stages of:
in a tank (1), arrange an electrolytic solution composed of distilled water and a basic alkaline catalyst, where said tank (1) is connected by a plurality of conduits enabled for the circulation of a fluid with an electrolytic cell (6) that, in turn, it is associated with a pulsating direct current power supply (8),
generate the electrolysis of water in the electrolytic cell (6) by means of a pulsating direct current,
recirculate the electrolytic solution from the tank (1) to the electrolytic cell (6) and the hydrogen gas generated by electrolysis from the electrolytic cell (6) to the tank (1),
circulate the gas generated in the electrolysis from the tank (1) through a circuit that includes a decanter (2), a bubbler tank (3), a filter (4) and anti-explosion means (5) until fuel gas is supplied to a heat engine (7).

7. The method according to claim 6, comprising an electrolyte decanting stage at the outlet of the tank (1).

8. The method according to claim 6 or 7 comprising a stage of drying the hydrogen gas from possible concentrations of water vapour before reaching the thermal machine (7).
